# EUROPEAN PATENT SPECIFICATION

(11) **EP 4 035 917 B1**
(45) Date of publication and mention of the grant of the patent: **26.07.2023**
(21) Application number: 22152291.5
(22) Date of filing: 19.01.2022
(51) Int. Cl.: B60K 1/04, H01M 10/60, B60K 1/00, H01M 10/625, H01M 10/658

(54) **HEAT INSULATING STRUCTURE OF ELECTRIC COMPONENT**
WÄRMEISOLIERENDE STRUKTUR EINES ELEKTRISCHEN BAUTEILS
STRUCTURE D'ISOLATION THERMIQUE D'UN COMPOSANT ÉLECTRIQUE

(30) Priority: 20.01.2021 JP 2021006979
(43) Date of publication of application: 03.08.2022
(73) Proprietor: Suzuki Motor Corporation, Hamamatsu-shi, Shizuoka 432-8611 (JP)
(72) Inventor: OBARA, Akihiro, Hamamatsu-shi, Shizuoka, 432-8611 (JP); HOSHINO, Shinichi, Hamamatsu-shi, Shizuoka, 432-8611 (JP); SANADA, Ayumu, Hamamatsu-shi, Shizuoka, 432-8611 (JP)
(74) Representative: Henkel & Partner mbB

(56) References cited:
- WO-A1-2013/187096
- WO-A1-2019/121641
- DE-A1-102011 103 986

## Description

### [Technical Field]

The present invention relates to a heat insulating structure of an electric component.

### [Background Art]

Conventionally, cooling structures for cooling electric components installed on a floor panel of a vehicle to prevent passengers from being affected by heat from the electric components are known (see JP2005-306239A).

WO 2019/121641 A1 discloses a multilayer thermal insulation element for thermal insulation of a battery.

Such cooling structures of electric components each include a battery module and a high-voltage electric component provided on an upper surface of the floor panel, and the battery module and the high-voltage electric component are accommodated in a battery case and a high-voltage electric component case, respectively.

A cooling apparatus is installed below the floor panel and the cooling apparatus cools the battery module and the high-voltage electric component by circulating air in the battery case and the high-voltage electric component case.

### [Citation List]

### [Patent Literature]

[Patent Literature 1] JP2005-306239A

### [Summary of Invention]

### [Technical Problem]

However, the conventional cooling structure of an electric component requires the cooling apparatus for cooling the battery module and the high-voltage electric component. For this reason, a space to install the cooling apparatus is necessary and the manufacturing cost for the cooling structure increases as much as the cooling apparatus is necessary.

The present invention has been implemented focusing on the above-described problem and an objective of the present invention is to provide a heat insulating structure of an electric component capable of eliminating the need for a cooling apparatus, improving heat dissipation performance of the electric component and preventing passengers from being affected by heat while preventing an increase in the manufacturing cost.

### [Solution to Problem]

The problem is solved by the invention as defined by the subject-matter of the independent claim. Potential further embodiments of the invention form the subject-matter of the dependent claims.

### [Advantageous Effects of Invention]

According to the above-described present invention, it is possible to eliminate the need for a cooling apparatus, improve heat dissipation performance of the electric component and prevent passengers from being affected by heat while preventing an increase in the manufacturing cost.

### [Brief Description of Drawings]

[Figure 1] Figure 1 is a diagram illustrating a vehicle room of a vehicle equipped with a heat insulating structure of an electric component according to an embodiment of the present invention viewed from diagonally above left.
[Figure 2] Figure 2 is a diagram illustrating the heat insulating structure of an electric component according to the embodiment of the present invention viewed from diagonally above left behind.
[Figure 3] Figure 3 is a diagram illustrating the heat insulating structure of an electric component according to the embodiment of the present invention viewed from above.
[Figure 4] Figure 4 is an exploded view of the heat insulating structure of an electric component according to the embodiment of the present invention viewed from diagonally above behind.
[Figure 5] Figure 5 is a diagram illustrating the heat insulating structure of an electric component according to the embodiment of the present invention viewed from above with an electric component, a heat insulating bracket and a cover member removed from a fixing bracket.
[Figure 6] Figure 6 is a cross-sectional view of Figure 3 viewing from a VI-VI direction arrow.
[Figure 7] Figure 7 is a diagram illustrating the heat insulating structure of an electric component according to the embodiment of the present invention showing the cover member viewed from diagonally front below left.
[Figure 8] Figure 8 is a diagram illustrating the heat insulating structure of an electric component according to the embodiment of the present invention showing the fixing bracket and the cover member viewed from diagonally front below right.
[Figure 9] Figure 9 is a diagram illustrating the heat insulating structure of an electric component according to the embodiment of the present invention showing the heat insulating bracket viewed from diagonally front below right.
[Figure 10] Figure 10 is a cross-sectional view of Figure 3 viewing from an X-X direction arrow.
[Figure 11] Figure 11 is a diagram illustrating the heat insulating structure of an electric component according to the embodiment of the present invention, showing the cover member and the heat insulating bracket with the cover member transparent viewed from diagonally above right.
[Figure 12] Figure 12 is a cross-sectional view of Figure 3 viewing from an XII-XII direction arrow.
[Figure 13] Figure 13 is a cross-sectional view of Figure 3 viewing from an XIII-XIII direction arrow.

### [Description of Embodiment]

The heat insulating structure of an electric component according to the present invention includes: a fixing member provided with a placement part having a placement surface on which an electric component is placed, the fixing member being fixed to a fixed part provided on an upper surface of a floor panel of a vehicle; a cover member including a cover-side ceiling wall and a plurality of cover-side side walls extending downward from the cover-side ceiling wall, the cover member being configured to cover the fixing member and the electric component from above and from a side; and a heat insulating member including a heat-insulating-member-side ceiling wall and at least one heat-insulating-member-side side wall extending downward from the heat-insulating-member-side ceiling wall, the heat insulating member being provided between the cover member and the electric component, in which the cover member includes a first support part, a second support part and a third support part, the first support part is provided on the cover-side ceiling wall and is in contact with one end portion of the heat-insulating-member-side ceiling wall in a direction in which the heat-insulating-member-side ceiling wall extends, the second support part is provided on a predetermined cover-side side wall facing the heat-insulating-member-side side wall among the plurality of cover-side side walls and is in contact with one end portion of the heat-insulating-member-side side wall in a direction in which the heat-insulating-member-side side wall extends, the third support part is provided on the predetermined cover-side side wall and is in contact with a bottom end portion orthogonal to the direction in which the heat-insulating-member-side side wall extends and the fixing member is located at a position where the placement surface is higher than the floor panel.

Thus, the heat insulating structure of an electric component according to the embodiment of the present invention can eliminate the need for a cooling apparatus, improve heat dissipation performance of the electric component and prevent passengers from being affected by heat while preventing an increase in the manufacturing cost.

### [Embodiment]

Hereinafter, the heat insulating structure of an electric component according to the present invention will be described with reference to the accompanying drawings.

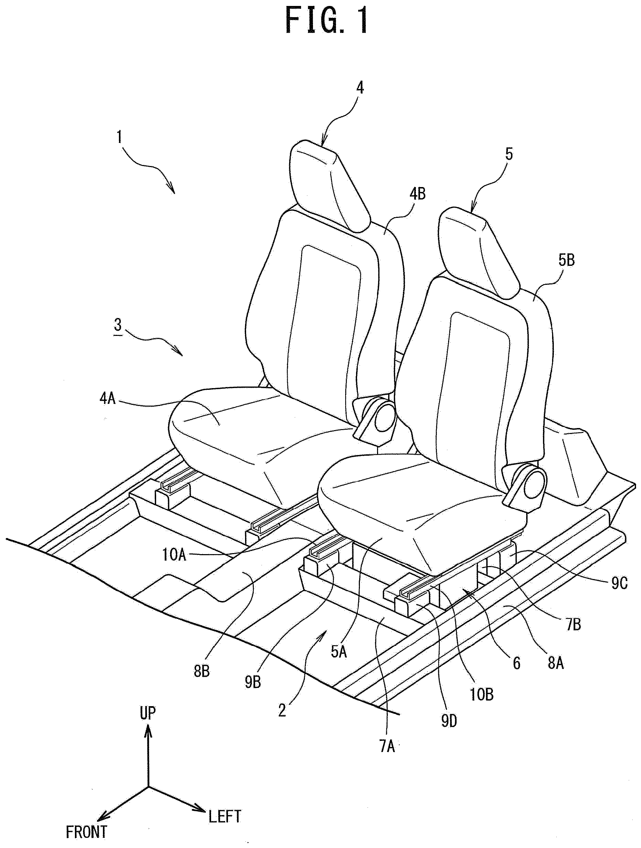

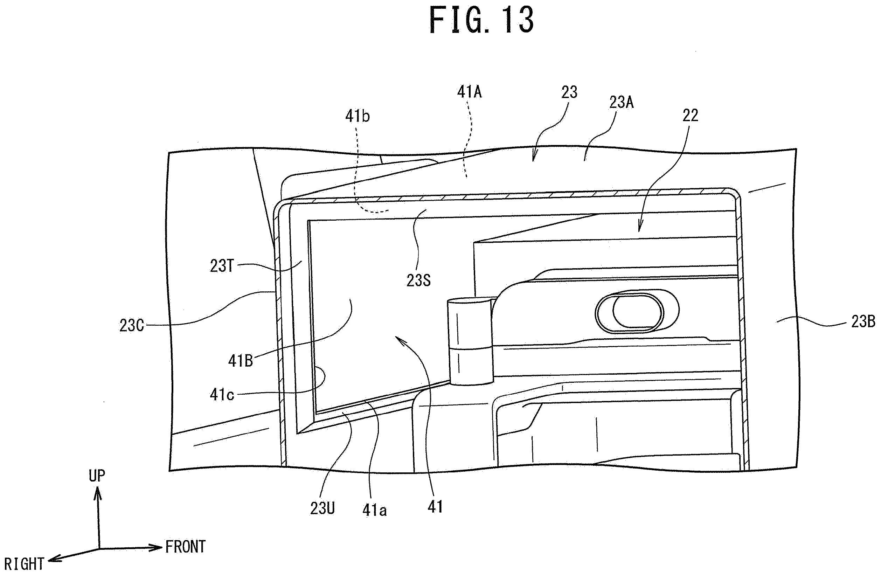

Figure 1 to Figure 13 are diagrams illustrating a heat insulating structure of an electric component of an embodiment according to the present invention. In Figure 1 to Figure 13, up-down, front-rear and left-right directions are based on an electric component mounted on a vehicle, and it is assumed that a front-rear direction of the vehicle is the front-rear direction, a left-right direction of the vehicle (vehicle width direction) is the left-right direction and an up-down direction of the vehicle (vehicle height direction) is the up-down direction.

First, a configuration will be described.

In Figure 1, a vehicle 1 includes a floor panel 2 and a vehicle room 3 is formed above the floor panel 2. An engine room separated from the vehicle room by a dash panel (not shown) is formed on the front side of the vehicle room 3 and a baggage compartment (not shown) is formed at the rear of the vehicle room 3.

A driver's seat 4 in which a driver is seated and an assistant driver's seat 5 in which a passenger is seated are installed on the floor panel 2, and the driver's seat 4 is separated from the assistant driver's seat 5 in a vehicle width direction.

The driver's seat 4 includes a seat cushion 4A that supports the driver's buttocks and thigh and a seat back 4B that receives and supports the driver's back. The assistant driver's seat 5 includes a seat cushion 5A that supports the passenger's buttocks and thigh, and a seat back 5B that receives and supports the passenger's back.

An electrical apparatus 6 is installed between the seat cushion 5A of the assistant driver's seat 5 and the floor panel 2.

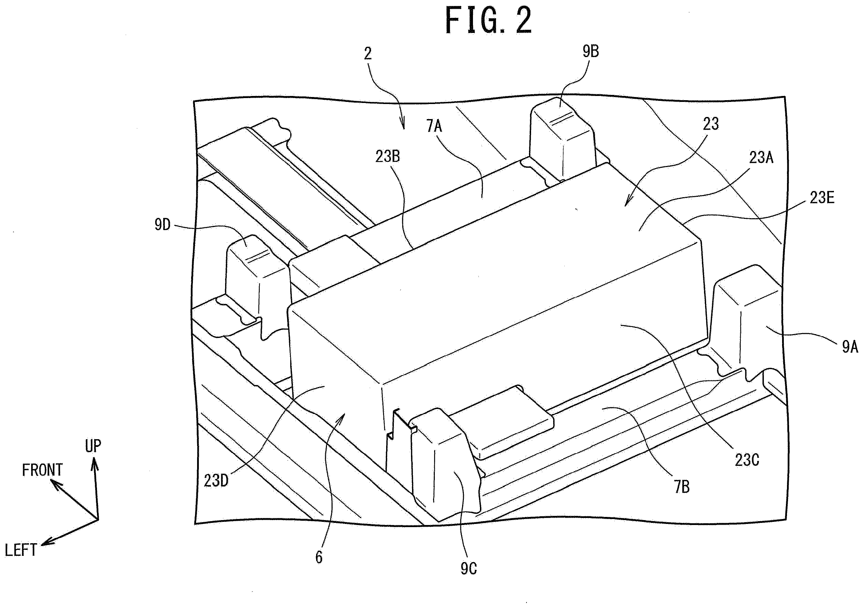

As shown in Figure 2, both a front-side cross member 7A and a rear-side cross member 7B, both of which are metallic, are attached to the floor panel 2 on the assistant driver's seat 5 side, and the front-side cross member 7A and the rear-side cross member 7B are separated in the front-rear direction and extend in the vehicle width direction.

As shown in Figure 1, a left-side side sill 8A is provided at a left side end portion of the floor panel 2 and the left-side side sill 8A extends in the front-rear direction along the floor panel 2.

A floor tunnel 8B is provided in a center part of the floor panel 2 in the vehicle width direction and the floor tunnel 8B bulges upward from the floor panel 2. The floor tunnel 8B is located between the driver's seat 4 and the assistant driver's seat 5 and extends in the front-rear direction along the floor panel 2.

When the vehicle 1 is viewed from above, the electrical apparatus 6 is installed on the floor panel 2 so as to be surrounded by the front-side cross member 7A, the rear-side cross member 7B, the left-side side sill 8A and the floor tunnel 8B.

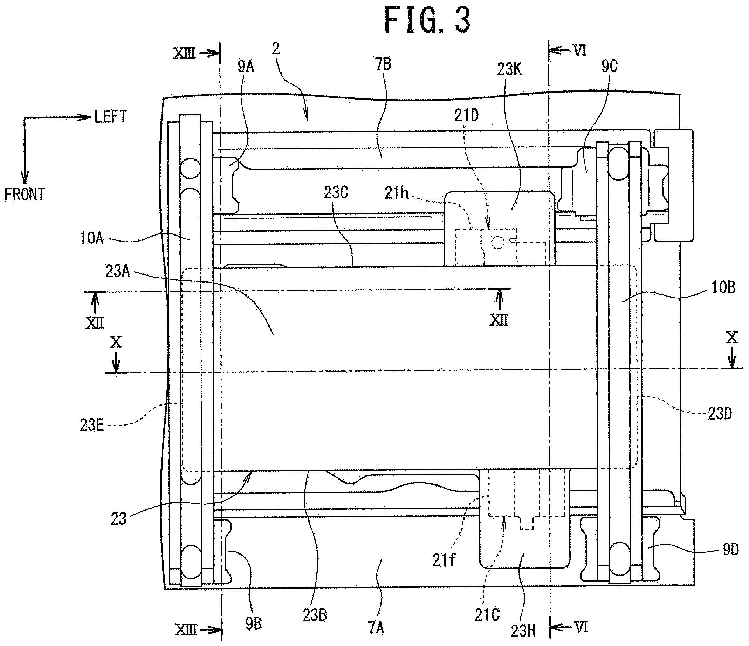

As shown in Figure 2 and Figure 3, support brackets 9A, 9B, 9C and 9D are provided at left end and right end portions of the front-side cross member 7A and the rear-side cross member 7B respectively in the vehicle width direction and the support brackets 9A, 9B, 9C and 9D protrude upward from the front-side cross member 7A and the rear-side cross member 7B.

As shown in Figure 1 and Figure 3, a slide rail 10A is provided at upper end portions of the support brackets 9A and 9B, and the slide rail 10A extends in the front-rear direction.

A slide rail 10B is provided at upper end portions of the support brackets 9C and 9D and the slide rail 10B extends in the front-rear direction parallel to the slide rail 10A. The electrical apparatus 6 is installed below the slide rails 10A and 10B.

A pair of base frames (not shown) are provided at the bottom of the seat cushion 5A of the assistant driver's seat 5 and the base frames engage with the slide rails 10A and 10B so as to be slidable with respect to the slide rails 10A and 10B in the front-rear direction.

Thus, as the base frames move with respect to the slide rails 10A and 10B in the front-rear direction, the assistant driver's seat 5 moves with respect to the floor panel 2 in the front-rear direction.

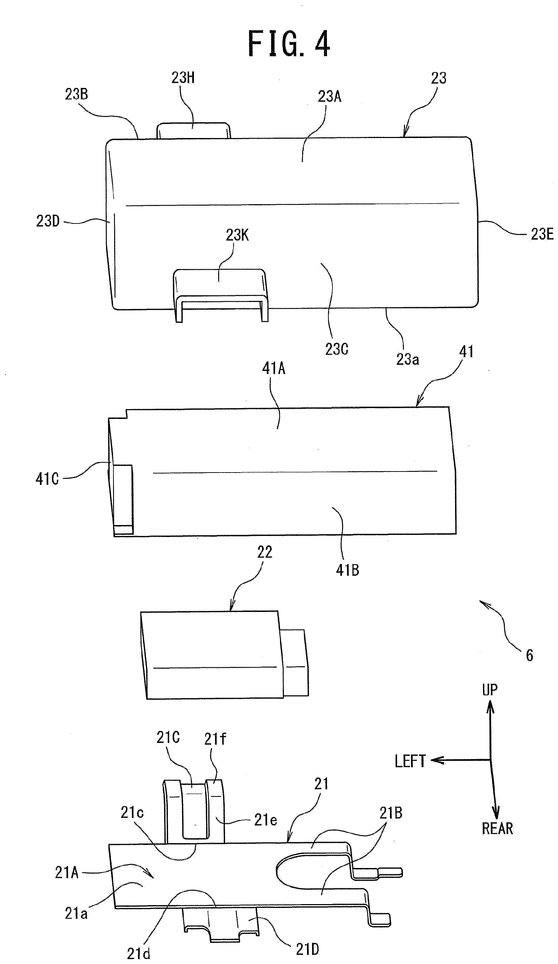

As shown in Figure 4, the electrical apparatus 6 includes a metallic fixing bracket 21 that constitutes a fixing member, an electric component 22, a resin cover member 23 and a metallic heat insulating bracket 41.

The fixing bracket 21 includes a placement part 21A, a bifurcated fixing portion 21B, a front-side fixing portion 21C and a rear-side fixing portion 21D.

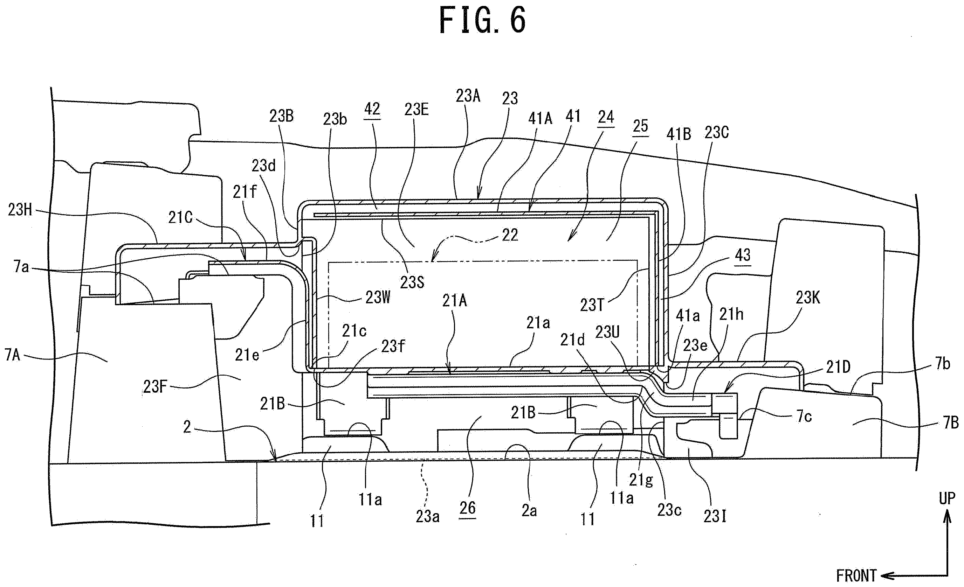

As shown in Figure 6, the placement part 21A is located at a position higher than an upper surface 2a of the floor panel 2 (that is, above the upper surface 2a of the floor panel 2) and has a placement surface 21a on an upper surface thereof. The electric component 22 is placed on the placement surface 21a and the electric component 22 is fixed to the placement part 21A by a fixture such as a screw (not shown).

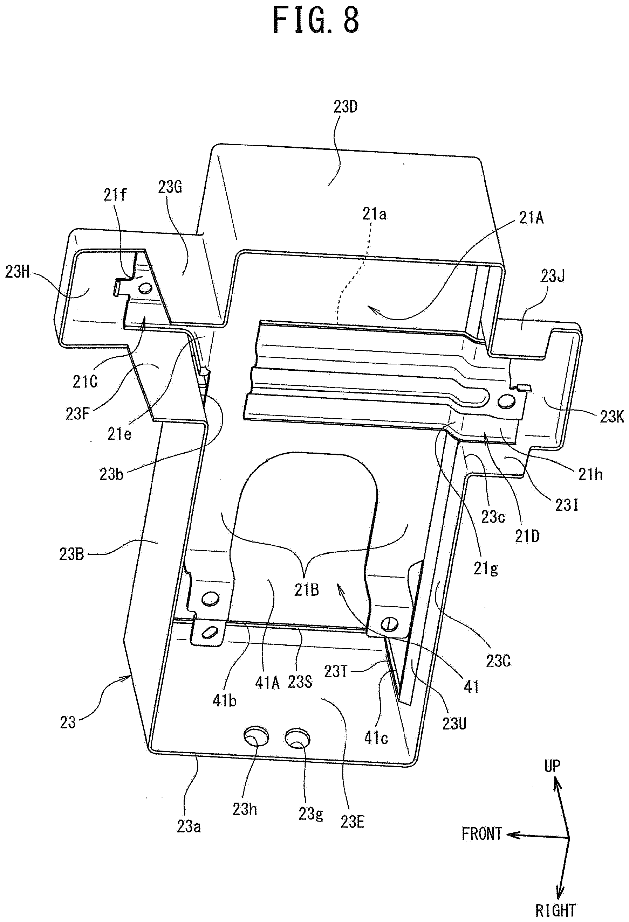

As shown in Figure 4 and Figure 8, the fixing portion 21B extends rightward linearly from the right end portion of the placement part 21A and is then bent downward.

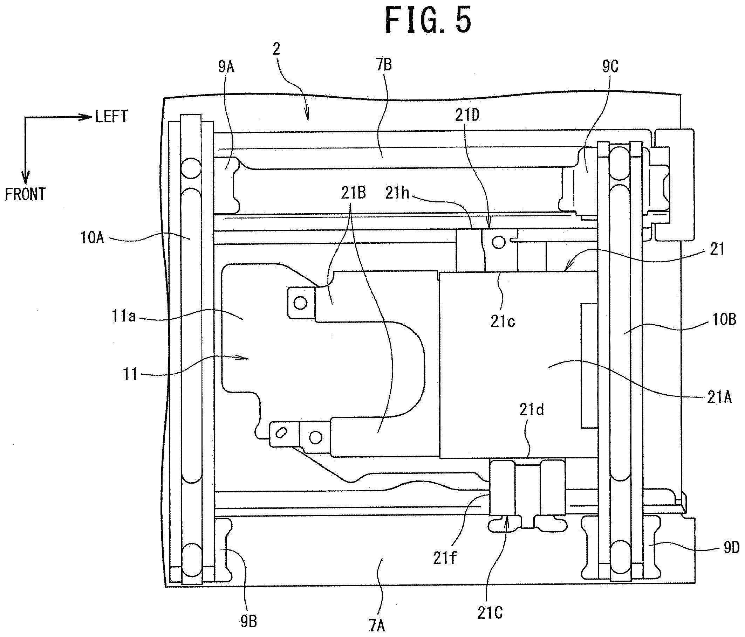

As shown in Figure 5, when the vehicle 1 is viewed from above, a metallic bracket 11 is provided in a space surrounded by the front-side cross member 7A, the rear-side cross member 7B and the slide rails 10A and 10B, and an upper surface 11a of the bracket 11 is located at a position higher than the upper surface 2a of the floor panel 2 and at a position lower than the placement part 21A (see Figure 6).

A bottom end portion of the fixing portion 21B is fixed to the upper surface 11a of the bracket 11 by a fixture such as a screw (not shown).

As shown in Figure 6, the front-side fixing portion 21C includes a longitudinal wall 21e that extends upward linearly from a front end portion 21c of the placement part 21A and a lateral wall 21f that extends forward linearly from the longitudinal wall 21e and the lateral wall 21f is fixed to the front-side cross member 7Aby a fixture such as a screw (not shown).

The rear-side fixing portion 21D includes a longitudinal wall 21g that extends downward from a rear end portion 21d of the placement part 21A and a lateral wall 21h that extends rearward linearly from the longitudinal wall 21g and the lateral wall 21h is fixed to the rear-side cross member 7B by a fixture such as a screw (not shown).

The front end portion 21c of the placement part 21A of the present embodiment constitutes one end portion of the placement part and the rear end portion 21d of the placement part 21A constitutes the other end portion of the placement part. The front-side cross member 7A and the rear-side cross member 7B each contain regions with different heights in the front-rear direction.

As shown in Figure 6, the front-side fixing portion 21C is fixed to an upper surface 7a of the front-side cross member 7A located at a position higher than the placement surface 21a of the placement part 21A. The rear-side fixing portion 21D is fixed to a lower portion 7c of the rear-side cross member 7B provided at a position higher than the upper surface 2a of the floor panel 2 and lower than the placement part 21A. The lower portion 7c is a region lower than an upper surface 7b of the rear-side cross member 7B.

Thus, the fixing bracket 21 is fixed to the floor panel 2 via the front-side cross member 7A, the rear-side cross member 7B and the bracket 11 such that the placement surface 21a is located at a position lower than the upper surface 7a of the front-side cross member 7A and higher than the lower portion 7c of the rear-side cross member 7B.

The fixing bracket 21 of the present embodiment constitutes a fixing member and constitutes an electric component. The front-side cross member 7A, the rear-side cross member 7B and the bracket 11 constitute a fixed part.

The rear-side fixing portion 21D constitutes a first fixing portion and the front-side fixing portion 21C constitutes a second fixing portion. The rear-side cross member 7B constitutes a fixed part and a first fixed part, the lower portion 7c of the rear-side cross member 7B constitutes a first fixed region. The front-side cross member 7A constitutes a fixed part and a second fixed part and the upper surface 7a of the front-side cross member 7A constitutes a second fixed region.

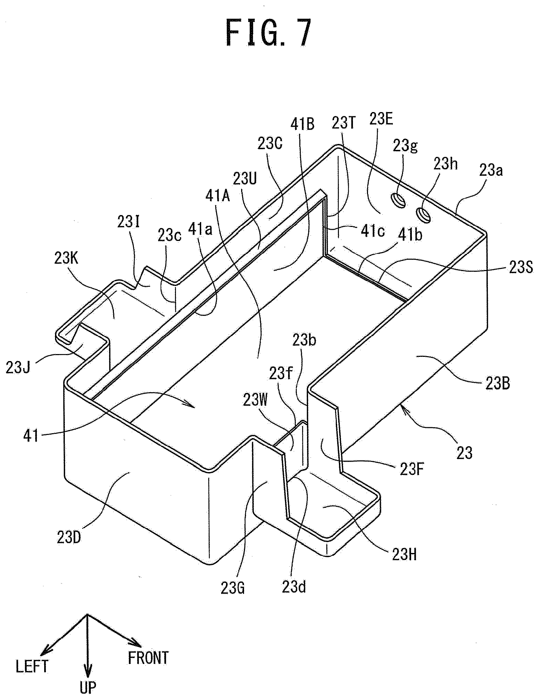

As shown in Figure 7 and Figure 8, the cover member 23 includes a ceiling wall 23A, a front wall 23B, a rear wall 23C, a left side wall 23D and a right side wall 23E.

The front wall 23B and the rear wall 23C extend downward from the ceiling wall 23A and face each other in the front-rear direction.

The left side wall 23D extends downward from the ceiling wall 23A and communicates the left end portion of the front wall 23B with the left end portion of the rear wall 23C. The right side wall 23E extends downward from the ceiling wall 23A and communicates the right end portion of the front wall 23B with the right end portion of the rear wall 23C.

The bottoms of the front wall 23B, the rear wall 23C, the left side wall 23D and the right side wall 23E are open and the cover member 23 covers the fixing bracket 21 and the electric component 22 with the ceiling wall 23A, the front wall 23B, the rear wall 23C, the left side wall 23D and the right side wall 23E from above and from the side (front to rear, left to right).

That is, the cover member 23 covers the fixing bracket 21 and the electric component 22 to ensure that the fixing bracket 21 and the electric component 22 are not visible from the outside.

Compared to the lengths of the front wall 23B and the rear wall 23C in the front-rear direction, the lengths of the left side wall 23D and the right side wall 23E in the vehicle width direction are shorter, and the cover member 23 is formed in a rectangular shape when viewed from above.

The lengths (heights) of the front wall 23B, the rear wall 23C, the left side wall 23D and the right side wall 23E in the up-down direction are formed identically and a bottom end portion 23a of the front wall 23B, the rear wall 23C, the left side wall 23D and the right side wall 23E is located at a position lower than the placement surface 21a of the fixing bracket 21 (see Figure 6). Hereinafter, the bottom end portion 23a of the front wall 23B, the rear wall 23C, the left side wall 23D and the right side wall 23E is also referred to as the bottom end portion 23a of the cover member 23.

The bottom end portion 23a of the cover member 23 is in contact with the upper surface 2a of the floor panel 2 and is located at the same height position as that of the upper surface 2a of the floor panel 2.

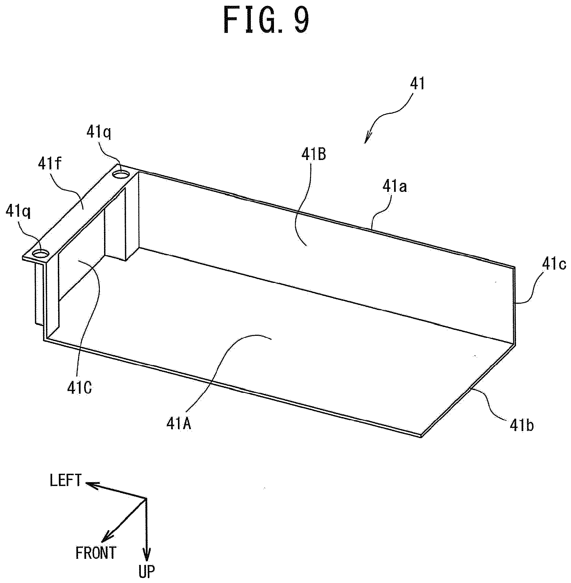

As shown in Figure 4 and Figure 9, the heat insulating bracket 41 is provided with a ceiling wall 41A, a rear wall 41B that extends downward from the rear end portion of the ceiling wall 41 and a left side wall 41C that extends downward from the left end of the ceiling wall 41A.

The ceiling wall 41A of the heat insulating bracket 41 faces the ceiling wall 23A of the cover member 23 in the up-down direction.

The rear wall 41B of the heat insulating bracket 41 faces the rear wall 23C of the cover member 23 in the front-rear direction and extends from the ceiling wall 41A below a center part of the rear wall 23C in the up-down direction.

That is, as shown in Figure 6, the length of the rear wall 41B from the ceiling wall 41A of the heat insulating bracket 41 to a bottom end portion 41a in the up-down direction is formed to be shorter than the length of the rear wall 23C from the ceiling wall 23A of the cover member 23 to the bottom end portion 23a in the up-down direction and the bottom end portion 41a of the rear wall 41B of the heat insulating bracket 41 is located above the bottom end portion 23a of the rear wall 23C of the cover member 23.

The left side wall 41C of the heat insulating bracket 41 faces the left side wall 23D of the cover member 23 in the vehicle width direction and extends downward from the ceiling wall 41A by the same length as that of the rear wall 41B.

The heat insulating bracket 41 is installed between the cover member 23 and the electric component 22 such that the ceiling wall 41A, the rear wall 41B and the left side wall 41C cover the upper, rear and left sides of the electric component 22.

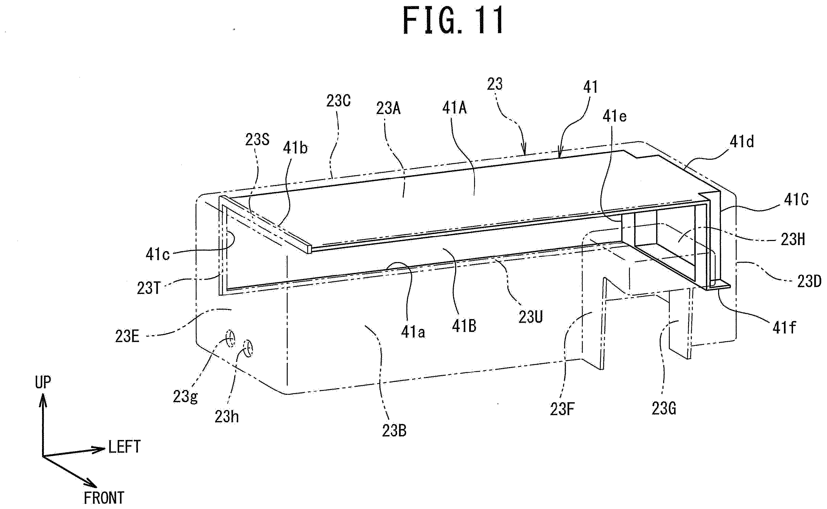

As shown in Figure 9, a bottom end portion 41f of the left side wall 41C is formed to be wider than the bottom end portion 41a of the rear wall 41B. As shown in Figure 11, the left side wall 41C is in contact with the left side wall 23D of the cover member 23.

As shown in Figure 9, fastening parts 41q are provided at the bottom end portion 41f of the left side wall 41C.

The fastening parts 41q are each fastened to the placement part 21A of the fixing bracket 21 by a fixture such as a screw (not shown) and the heat insulating bracket 41 is attached to the fixing bracket 21.

The ceiling wall 23A of the cover member 23 of the present embodiment constitutes a cover-side ceiling wall and the front wall 23B, the rear wall 23C, the left side wall 23D and the right side wall 23E constitute cover-side side walls. The rear wall 23C constitutes a predetermined cover-side side wall and a first cover-side side wall and the front wall 23B constitutes a second cover-side side wall.

The heat insulating bracket 41 constitutes a heat insulating member. The ceiling wall 41A of the heat insulating bracket 41 constitutes a heat-insulating-member-side ceiling wall, and the rear wall 41B constitutes a heat-insulating-member-side side wall.

As shown in Figure 7, a front-side opening 23b is formed in the front wall 23B of the cover member 23 and the front-side opening 23b is cut out upward from the bottom end portion 23a of the front wall 23B. That is, the front-side opening 23b is open in the up-down direction of the front wall 23B.

A rear-side opening 23c is formed in the rear wall 23C of the cover member 23 and the rear-side opening 23c is cut out upward from the bottom end portion 23a of the rear wall 23C. That is, the rear-side opening 23c is open in the up-down direction of the rear wall 23C.

As shown in Figure 6, an upper end portion 23d of the front-side opening 23b is located above an upper end portion 23e of the rear-side opening 23c. More specifically, the upper end portion 23e of the rear-side opening 23c is located at the same height position as that of the placement surface 21a of the placement part 21A and the upper end portion 23d of the front-side opening 23b is located above the placement surface 21a of the placement part 21A and near the ceiling wall 23A.

As shown in Figure 6 and Figure 8, the lateral wall 21f of the front-side fixing portion 21C is located at a position higher than the lateral wall 21h of the rear-side fixing portion 21D and extends from the front end portion 21c of the placement part 21A through the front-side opening 23b forward (outward) from the front wall 23B.

The lateral wall 21h of the rear-side fixing portion 21D is located at a position lower than the lateral wall 21f of the front-side fixing portion 21C and extends from the rear end portion 21d of the placement part 21A through the rear-side opening 23c rearward (outward) from the rear wall 23C.

When the cover member 23 covers the fixing bracket 21 and the electric component 22 from above and from the side, the front-side fixing portion 21C and the rear-side fixing portion 21D are inserted through the front-side opening 23b and the rear-side opening 23c, and the front-side opening 23b and the rear-side opening 23c are guided downward along the front-side fixing portion 21C and the rear-side fixing portion 21D.

Since the upper end portion 23d of the front-side opening 23b is located above the upper end portion 23e of the rear-side opening 23c, the lateral wall 21f of the front-side fixing portion 21C never comes into contact with the upper end portion 23d of the front-side opening 23b and the cover member 23 is allowed to move until the bottom end portion 23a of the cover member 23 comes into contact with the floor panel 2.

As shown in Figure 7 and Figure 8, the front wall 23B is provided with protruding walls 23F, 23G and 23H. The protruding walls 23F and 23G protrude forward from left and right edges of the front-side opening 23b and face each other in the vehicle width direction.

The protruding wall 23H protrudes forward from the upper edge of the upper end portion 23d of the front-side opening 23b and covers the lateral wall 21f of the front-side fixing portion 21C from above (see Figure 3 and Figure 6).

The distal ends of the protruding walls 23F and 23G in the protruding direction are in contact with the front-side cross member 7A and the protruding wall 23H is in contact with the upper surface 7a of the front-side cross member 7A (see Figure 6).

In this way, the front-side opening 23b is closed by the protruding walls 23F, 23G and 23H and the front-side cross member 7A, and an internal space 24 of the cover member 23 (see Figure 6) is out of communication with the outside (outside air) of the cover member 23 via the front-side opening 23b.

The rear wall 23C of the cover member 23 is provided with protruding walls 23I, 23J and 23K. The protruding walls 23I and 23J protrude rearward from left and right edges of the rear-side opening 23c and face each other in the vehicle width direction.

The protruding wall 23K protrudes rearward from an upper edge of the upper end portion 23d of the rear-side opening 23c and covers a lateral wall 21h of the rear-side fixing portion 21D from above (see Figure 3 and Figure 6).

The distal ends of the protruding walls 23I and 23J in the protruding direction are in contact with the rear-side cross member 7B and the protruding wall 23K is in contact with the upper surface 7b of the rear-side cross member 7B (see Figure 6).

In this way, the rear-side opening 23c is closed by the protruding walls 23I, 23J and 23K and the rear-side cross member 7B, and the internal space 24 of the cover member 23 is out of communication with the outside (outside air) of the cover member 23 via the rear-side opening 23c.

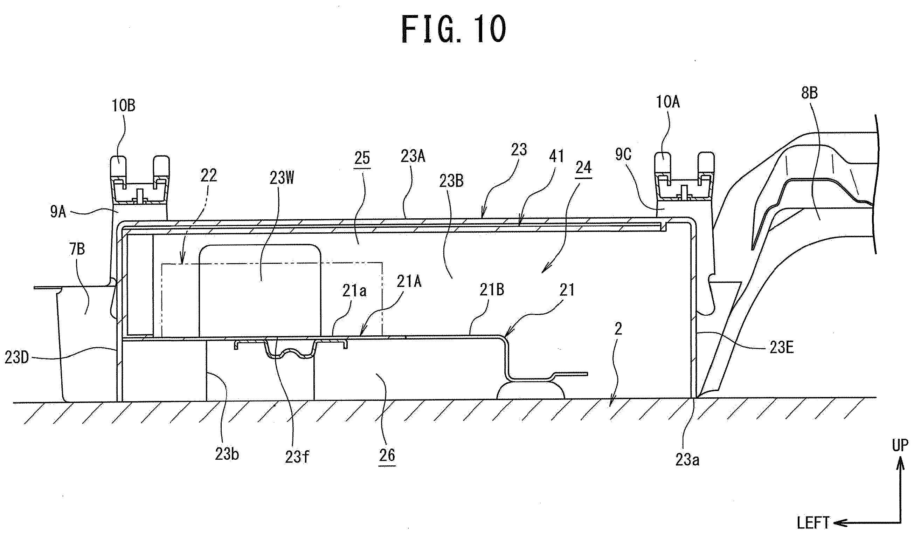

As shown in Figure 6 and Figure 7, the front wall 23B of the cover member 23 is provided with a partition wall 23W. The partition wall 23W closes an upper side portion of the front-side opening 23b (see Figure 10).

More specifically, a bottom end portion 23f of the partition wall 23W is located at the same height position as that of the placement surface 21a (see Figure 10) and an air space is formed in an upper internal space 25 of the cover member 23 above the placement surface 21a of the internal space 24 of the cover member 23. Note that the partition wall 23W may close the entire front-side opening 23b.

An air space is also formed in a lower side internal space 26 below the placement part 21A of the internal space 24 of the cover member 23.

Engaging parts are formed on both the left and right sides of the partition wall 23W and both the left and right sides of the longitudinal wall 21e of the front-side fixing portion 21C strongly engage with the engaging parts. In this way, the cover member 23 is fixed to the fixing bracket 21.

In the cover member 23, the lateral wall 21f of the front-side fixing portion 21C engages with the front-side opening 23b and the lateral wall 21h of the rear-side fixing portion 21D engages with the rear-side opening 23c.

In the cover member 23, the distal ends of the protruding walls 23F and 23G in the protruding direction come into contact with the front-side cross member 7A and the protruding wall 23H comes into contact with the upper surface 7a of the front-side cross member 7A.

In addition, in the cover member 23, the distal ends of the protruding walls 23I and 23J in the protruding direction come into contact with the rear-side cross member 7B and the protruding wall 23K is in contact with the upper surface 7b of the rear-side cross member 7B.

Thus, the cover member 23 is stably fixed to the fixing bracket 21 without moving with respect to the floor panel 2.

As shown in Figure 7 and Figure 11, the ceiling wall 23A of the cover member 23 is provided with a rib 23S. The rib 23S is provided at a right end portion of the ceiling wall 23A and extends linearly from the front end to the rear end of the ceiling wall 23A.

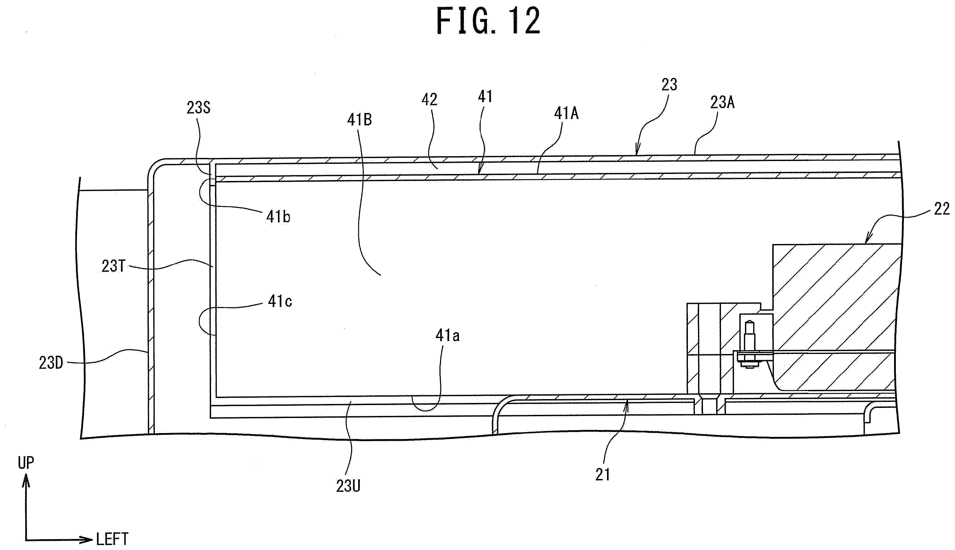

As shown in Figure 6 and Figure 7, the rib 23S protrudes downward from the ceiling wall 23A, that is, from the ceiling wall 23Atoward the electric component 22. As shown in Figure 11 and Figure 12, a right end portion 41b of the ceiling wall 41A is in contact with the rib 23 S over the front-rear direction.

The rib 23S constitutes a first support part and the right end portion 41b of the ceiling wall 41A of the heat insulating bracket 41 constitutes one end portion in a direction in which the heat-insulating-member-side ceiling wall extends.

As shown in Figure 7 and Figure 11, the rear wall 23C of the cover member 23 is provided with a rib 23T. The rib 23T is provided at the right end portion of the rear wall 23C and extends downward linearly from the ceiling wall 23A.

As shown in Figure 6 and Figure 7, the rib 23T protrudes forward from the rear wall 23C, that is, from the rear wall 23C toward the electric component 22. As shown in Figure 11, Figure 12 and Figure 13, the right end portion 41c of the rear wall 41B is in contact with the rib 23T over the up-down direction.

The rib 23T of the present embodiment constitutes a second rib and the right end portion 41c of the rear wall 41B constitutes one end portion in a direction in which the heat-insulating-member-side side wall extends.

As shown in Figure 7 and Figure 11, the rear wall 23C of the cover member 23 is provided with a rib 23U. The rib 23U is provided below a center part of the rear wall 23C in the up-down direction and extends linearly over the vehicle width direction of the rear wall 23C.

As shown in Figure 5 and Figure 6, the rib 23U protrudes forward from the rear wall 23C, that is, from the rear wall 23C toward the electric component 22. As shown in Figure 11, Figure 12 and Figure 13, the bottom end portion 41a of the rear wall 41B is in contact with the rib 23U over the vehicle width direction.

The rib 23U of the present embodiment constitutes a third rib and the bottom end portion 41a of the rear wall 41B constitutes a bottom end portion orthogonal to the direction in which the heat-insulating-member-side side wall extends.

As shown in Figure 6, a gap 42 is formed between the ceiling wall 23A of the cover member 23 and the ceiling wall 41A of the heat insulating bracket 41, and an air space (air layer) is formed in the gap 42.

A gap 43 is formed between the rear wall 23C of the cover member 23 and the rear wall 41B of the heat insulating bracket 41 and an air space (air layer) is formed in the gap 43.

That is, in a state in which the right end portion 41b of the ceiling wall 41A is in contact with the rib 23S, the right end portion 41c of the rear wall 41B is in contact with the rib 23T and the bottom end portion 41a of the rear wall 41B is in contact with the rib 23U, the heat insulating bracket 41 of the present embodiment includes the gap 42 formed between the ceiling wall 23A and the ceiling wall 41A and the gap 43 formed between the rear wall 23C and the rear wall 41B.

Thus, the right end portion of the gap 42 formed between the right end portion 41b of the ceiling wall 41A and the ceiling wall 23A is closed by the rib 23S.

The right end portion of the gap 43 formed between the right end portion 41c of the rear wall 41B and the rear wall 23C is closed by the rib 23T.

In addition, the bottom end portion of the gap 43 formed between the bottom end portion 41a of the rear wall 41B and the rear wall 23C is closed by the rib 23U.

As shown in Figure 11, the left side wall 41C of the heat insulating bracket 41 is in contact with the left side wall 23D and a gap is formed between the left side wall 41C and the left side wall 23D.

Thus, the left end portion of the gap 42 formed between a left end portion 41d of the ceiling wall 41A and the ceiling wall 23A, and the left end portion of the gap 43 formed between a left end portion 41e of the rear wall 41B and the rear wall 23C are closed by the left side wall 41C.

Thus, it is possible to form air spaces (air layers) in the gap 42 between the ceiling wall 23A and the ceiling wall 41A and the gap 43 between the rear wall 41B and the rear wall 23C.

As shown in Figure 7 and Figure 8, a plurality of through holes 23g and 23h for passing wire harnesses (not shown) are formed in the right side wall 23E of the cover member 23. The through holes 23g and 23h are located at positions lower than the placement surface 21a of the placement part 21A.

The wire harnesses are connected to terminals of the electric component 22, wired to the outside of the cover member 23 from the terminal of the electric component 22 through the bifurcated fixing portion 21B and the through holes 23g and 23h and connected to another electric component mounted on the vehicle 1.

The wire harnesses pass below the floor tunnel 8B and are disposed from below the driver's seat 4 to the lower side of the assistant driver's seat 5.

Note that although the through holes for passing the wire harnesses may be formed in any one of the front wall 23B, the rear wall 23C and the left side wall 23D, the through holes are preferably located at positions lower than the placement surface 21a of the placement part 21A in this case.

Next, effects of the heat insulating structure of the electric component 22 of the present embodiment will be described.

Since the electrical apparatus 6 of the present embodiment is installed between the seat cushion 5A of the assistant driver's seat 5 and the floor panel 2, it is possible to install the electrical apparatus 6 in the vehicle room 3 in a lower temperature environment than in the engine room and more easily extract the performance of the electric component 22.

In addition, it is possible to prevent the space of the baggage compartment from being blocked by the electrical apparatus 6, improve installation performance of the electrical apparatus 6, eliminate the need for installing the electrical apparatus 6 in the engine room and therefore reduce the size of the engine room.

When the electrical apparatus 6 is placed on the upper surface 2a of the floor panel 2, there is a possibility that the electric component 22 may be shocked by the kicking of the feet of a passenger seated in the rear seat (not shown) behind the assistant driver's seat 5 and the passenger may be affected by heat of the electric component 22.

The heat insulating structure of the electric component 22 of the present embodiment is equipped with the fixing bracket 21 provided with the placement part 21A having the placement surface 21a on which the electric component 22 is placed, and the fixing bracket 21 is fixed to the front-side fixing portion 21C, the rear-side fixing portion 21D and the bracket 11 provided on the upper surface 2a of the floor panel 2 of the vehicle 1.

The heat insulating structure of the electric component 22 includes the ceiling wall 23A, the front wall 23B, the rear wall 23C, the left side wall 23D and the right side wall 23E that extend downward from the ceiling wall 23A, and the cover member 23 that covers the fixing bracket 21 and the electric component 22 from above and from the side.

The heat insulating structure of the electric component 22 includes the ceiling wall 41A, the rear wall 41B and the left side wall 41C that extend downward from the ceiling wall 41A, and the heat insulating bracket 41 provided between the cover member 23 and the electric component 22.

When the passenger seated behind the assistant driver's seat 5 kicks the cover member 23, the heat insulating bracket 41 can receive the shock, prevent the load from applying to the electric component 22 and protect the electric component 22. In addition to this, the heat insulating bracket 41 can prevent the passenger from directly touching the hot electric component 22.

When the passenger seated behind the assistant driver's seat 5 puts his/her hand between the cover member 23 and the assistant driver's seat 5, the ceiling wall 41A of the heat insulating bracket 41 can prevent the passenger from directly touching the hot electric component 22.

When an external force is applied from the left side of the vehicle 1, the left side wall 41C of the heat insulating bracket 41 can receive the load and protect the electric component 22.

In the heat insulating structure of the electric component 22, the cover member 23 includes the rib 23S, the rib 23T and the rib 23U.

The rib 23S is provided on the ceiling wall 23A, is in contact with the right end portion 41b in the direction in which the ceiling wall 41A extends, and the rib 23S is provided on the rear wall 23C facing the rear wall 41B and is in contact with the right end portion 41c of the rear wall 41B.

The rib 23U is provided on the rear wall 23C and is in contact with the bottom end portion 41a orthogonal to the direction (vehicle width direction) in which the rear wall 41B extends.

It is thereby possible to close the right end portion of the gap 42 formed between the right end portion 41b of the ceiling wall 41A and the ceiling wall 23A by the rib 23S, close the right end portion of the gap 43 formed between the right end portion 41c of the rear wall 41B and the rear wall 23C by the rib 23T and close the bottom end portion of the gap 43 formed between the bottom end portion 41a of the rear wall 41B and the rear wall 23C by the rib 23U.

This makes it possible to prevent heat leakage from the electric component 22 between the ceiling wall 23A of the cover member 23 and the ceiling wall 41A of the heat insulating bracket 41, and between the rear wall 41B of the cover member 23 and the rear wall 41B of the heat insulating bracket 41.

Therefore, it is possible to block the heat of the electric component 22 by the heat insulating bracket 41, prevent the heat from transmitting to the ceiling wall 23A of the cover member 23 and the rear wall 23C, and prevent the passenger from being affected by the heat of the hot electric component 22.

It is also possible to transmit the heat of the hot air generated from the electric component 22 from the metallic heat insulating bracket 41 to the metallic fixing bracket 21, then transmit the heat through the front-side cross member 7A, the rear-side cross member 7B and the bracket 11 to the floor panel 2 and dissipate the heat below the floor panel 2.

The heat dissipating structure of the electric component 22 of the present embodiment can eliminate the need for a cooling apparatus, improve heat dissipation performance of the electric component 22 and prevent passengers from being affected by heat while preventing an increase in the manufacturing cost of the heat dissipating structure of the electric component 22.

According to the heat insulating structure of the electric component 22 of the present embodiment, since the placement surface 21a of the fixing bracket 21 is located at a position higher than the upper surface 2a of the floor panel 2 and it is thereby possible to form an air space in the space below the placement part 21A.

This allows heat generated from the electric component 22 to escape to the air space below the placement part 21A. As a result, it is possible to improve heat discharge performance of the electric component 22 and prevent temperature rise of the electric component 22.

According to the heat insulating structure of the electric component 22 of the present embodiment, the gap 42 is formed between the ceiling wall 23A of the cover member 23 and the ceiling wall 41A of the heat insulating bracket 41, and the gap 43 is formed between the rear wall 23C of the cover member 23 and the rear wall 41B of the heat insulating bracket 41.

Thus, it is possible to form air spaces (air layers) in the gap 42 between the ceiling wall 23A of the cover member 23 and the ceiling wall 41A of the heat insulating bracket 41 and in the gap 43 between the rear wall 41B of the cover member 23 and the rear wall 41B of the heat insulating bracket 41.

Therefore, it is possible not only to block heat generated from the electric component 22 by the heat insulating bracket 41, but also to prevent the heat generated from the electric component 22 from transmitting above the ceiling wall 41A and behind the rear wall 41B through the air spaces and effectively prevent the passenger from being affected by the heat of the hot electric component 22.

In the heat insulating structure of the electric component 22 of the present embodiment, the cover member 23 includes the rear-side fixing portion 21D provided at the front end portion 21c of the placement part 21A and the front-side fixing portion 21C provided at the other end portion of the placement part 21A.

The heat insulating structure of the electric component 22 of the present embodiment includes the front-side cross member 7A and the rear-side cross member 7B.

The rear-side cross member 7B includes the lower portion 7c to which the rear-side fixing portion 21D is fixed. The front-side cross member 7A includes the upper surface 7a located at a position higher than the lower portion 7c and the front-side fixing portion 21C is fixed to the upper surface 7a.

The front-side opening 23b is provided on the front wall 23B facing the rear wall 23C and the front-side opening 23b is open in the up-down direction so that the upper end portion 23d is located above the placement surface 21a.

The rear-side fixing portion 21D extends from the front end portion 21c of the placement part 21A through the front-side opening 23b to the outside of the front wall 23B.

In addition to this, the partition wall 23W is provided on the front wall 23B and the partition wall 23W closes the upper side of the front-side opening 23b.

It is therefore possible to prevent the heat of the electric component 22 from passing through the front-side opening 23b and being transmitted to the space in front of the assistant driver's seat 5 or to the seat cushion 5A above and prevent the passenger in the assistant driver's seat 5 from being affected by the heat.

Moreover, the hot air inside the cover member 23 is transmitted from the metallic heat insulating bracket 41 through the metallic fixing bracket 21 to the floor panel 2 and then dissipated below the floor panel 2, and it is therefore possible to improve heat dissipation performance of the electric component 22.

According to the heat insulating structure of the electric component 22 of the present embodiment, the placement surface 21a and the bottom end portion 23f of the partition wall 23W are located at the same height position.

This makes it possible to prevent heat of the electric component 22 from leaking from the front-side opening 23b through the gap between the placement surface 21a of the placement part 21A and the bottom end portion 23f of the partition wall 23W.

It is therefore possible to more effectively prevent the heat of the electric component 22 from passing through the front-side opening 23b and being transmitted to the space in front of the assistant driver's seat 5 or to the seat cushion 5A above and more effectively prevent the passenger in the assistant driver's seat 5 from being affected by the heat.

Although the fixed part of the present embodiment is constructed of the front-side cross member 7A and the rear-side cross member 7B on the floor panel 2, the fixed part may also be a region integral with the floor panel 2 (integrally molded).

The electric component is applicable, for example, to a battery or a DC-DC converter. However, the electric component is not limited to a battery or a DC-DC converter, but may be applicable to any electrical component as long as it is mounted on the vehicle 1.

Although the electrical apparatus 6 is installed between the seat cushion 5A of the assistant driver's seat 5 and the floor panel 2, the electrical apparatus 6 may be installed between the seat cushion 4A of the driver's seat 4 and the floor panel 2.

Although the heat insulating bracket 41 includes the rear wall 41B and the left side wall 41C as the heat-insulating-member-side side wall, there may be one or more heat-insulating-member-side side walls.

It is obvious that changes can be added by those skilled in the art without departing from the scope of the present invention, as defined by the appended claims. All such modifications and equivalents are intended to be included in the following claims.

### [Reference Signs List]

1...vehicle, 2...floor panel, 2a...upper surface (upper surface of floor panel), 7A...front-side cross member (fixed part, second fixed part), 7a...upper surface (second fixed region), 7B...rear-side cross member (fixed part, first fixed part), 7c...lower region (first fixed region), 21...fixing bracket (fixing member), 21A...placement part, 21a...placement surface, 21C...front-side fixing portion (second fixing portion), 21c...front end portion (one end portion of placement part), 21D...rear-side fixing portion (first fixing portion), 21d...rear end portion (other end portion of placement part), 22...electric component, 23...cover member, 23A...ceiling wall (cover-side ceiling wall), 23B...front wall (cover-side side wall, second cover-side side wall), 23b...front-side opening (opening), 23C...rear wall (cover-side side wall, predetermined cover-side side wall, first cover-side side wall), 23D...left side wall (cover-side side wall), 23E...right side wall (cover-side side wall), 23 f... bottom end portion (bottom end portion of partition wall), 23 S...rib (first support part), 23T...rib (second support part), 23U...rib (third support part), 23W...partition wall, 41...heat insulating bracket (heat insulating member), 41A...ceiling wall (heat-insulating-member-side ceiling wall), 41a...bottom end portion (bottom end portion orthogonal to direction in which heat-insulating-member-side side wall extends), 41B...rear wall (heat-insulating-member-side side wall), 41b...right end portion (one end portion of direction in which heat-insulating-member-side ceiling wall extends), 41c...right end portion (one end portion of direction in which heat-insulating-member-side side wall extends), 42, 43...gap

## Claims

1. A heat insulating structure of an electric component (22) comprising:
a fixing member (21) provided with a placement part (21A) having a placement surface (21a) on which an electric component (22) is placed;
a cover member (23) including a cover-side ceiling wall (23A) and a plurality of cover-side side walls (23B, 23C, 23D, 23E) extending downward from the cover-side ceiling wall (23A), the cover member being configured to cover the fixing member (21) and the electric component (22) from above and from a side; and
a heat insulating member (41) including a heat-insulating-member-side ceiling wall (41A) and at least one heat-insulating-member-side side wall (41B) extending downward from the heat-insulating-member-side ceiling wall (41A), the heat insulating member being provided between the cover member (23) and the electric component (22), the heat insulating structure being **characterised by**:
the fixing member (21) being fixed to a fixed part (7A, 7B) provided on an upper surface (2a) of a floor panel (2) of a vehicle (1) and the fixing member (21) is located at a position where the placement surface (21a) is higher than the floor panel (2); and
the cover member (23) includes a first support part (23S), a second support part (23T) and a third support part (23U),
the first support part (23 S) is provided on the cover-side ceiling wall (23A) and is in contact with one end portion (41b) of the heat-insulating-member-side ceiling wall (41A) in a direction in which the heat-insulating-member-side ceiling wall (41A) extends,
the second support part (23T) is provided on a predetermined cover-side side wall (23C) facing the heat-insulating-member-side side wall (41B) of the plurality of cover-side side walls (23B, 23C, 23D, 23E) and is in contact with one end portion (41b) of the heat-insulating-member-side side wall (41B) in a direction in which the heat-insulating-member-side side wall (41B) extends,
the third support part (23U) is provided on the predetermined cover-side side wall (23C) and is in contact with a bottom end portion (23f) orthogonal to the direction in which the heat-insulating-member-side side wall (41B) extends.

2. The heat insulating structure of an electric component (22) as claimed in claim 1, wherein
a gap is formed between the cover-side ceiling wall (23A) and the heat-insulating-member-side ceiling wall (41A), and
a gap is formed between the predetermined cover-side side wall (23C) and the heat-insulating-member-side side wall (41B).

3. The heat insulating structure of an electric component (22) as claimed in claim 1 or 2, wherein
the cover member (23) includes a first fixing portion (21D) provided at one end portion (21c) of the placement part (21A) and a second fixing portion (21C) provided at the other end portion (21d) of the placement part (21A),
the fixed part (7A, 7B) includes a first fixed part (7B) and a second fixed part (7A) located at positions higher than the floor panel (2),
the first fixed part (7B) includes a first fixed region (7c) to which the first fixing portion (21D) is fixed,
the second fixed part (7A) includes a second fixed region (7a) located at a position higher than the first fixed region (7c) and the second fixing portion (21C) is fixed to the second fixed region (7a),
when the predetermined cover-side side wall (23C) is used as a first cover-side side wall (23C), an opening (23b) is provided on a second cover-side side wall (23B) facing the first cover-side side wall (23C) of the plurality of cover-side side walls (23B, 23C, 23D, 23E),
the opening (23b) is open in an up-down direction so that an upper end portion of the opening (23b) is located above the placement surface (21a),
the first fixing portion (21D) extends from one end portion (21c) of the placement part (21A) through the opening (23b) to an outside of the second cover-side side wall (23B),
a partition wall (23W) is provided on the second cover-side side wall (23B), and
the partition wall (23W) closes at least part of the opening (23b).

4. The heat insulating structure of an electric component (22) as claimed in claim 3, wherein
the placement surface (21a) and the bottom end portion (23f) of the partition wall (23W) are located at a same height position.

## Patentansprüche

1. Eine wärmeisolierende Struktur einer elektrischen Komponente (22), umfassend:
ein Befestigungselement (21), das mit einem Platzierungsteil (21A) versehen ist, das eine Platzierungsoberfläche (21a) aufweist, auf der eine elektrische Komponente (22) platziert wird,
ein Abdeckelement (23), das eine abdeckungsseitige Deckenwand (23A) und eine Vielzahl von abdeckungsseitigen Seitenwänden (23B, 23C, 23D, 23E) enthält, die sich von der abdeckungsseitigen Deckenwand (23A) nach unten erstrecken, wobei das Abdeckelement konfiguriert ist, um das Befestigungselement (21) und die elektrische Komponente (22) von oben und von einer Seite abzudecken, und
ein wärmeisolierendes Element (41) mit einer wärmeisolierendes Element-seitigen Deckenwand (41A) und mindestens einer wärmeisolierendes Element-seitigen Seitenwand (41B), die sich von der wärmeisolierendes Element-seitigen Deckenwand (41A) nach unten erstreckt, wobei das wärmeisolierende Element zwischen dem Abdeckelement (23) und der elektrischen Komponente (22) vorgesehen ist,
wobei die wärmeisolierende Struktur **dadurch gekennzeichnet ist, dass**:
das Befestigungselement (21) an einem feststehenden Teil (7A, 7B) befestigt ist, das an einer oberen Oberfläche (2a) einer Bodenplatte (2) eines Fahrzeugs (1) vorgesehen ist, und das Befestigungselement (21) an einer Position angeordnet ist, an der die Platzierungsoberfläche (21a) höher als die Bodenplatte (2) ist, und
das Abdeckelement (23) ein erstes Trägerteil (23S), ein zweites Trägerteil (23T) und ein drittes Trägerteil (23U) aufweist,
das erste Trägerteil (23S) an der abdeckungsseitigen Deckenwand (23A) vorgesehen ist und in Kontakt mit einem Endabschnitt (41b) der wärmeisolierendes Element-seitigen Deckenwand (41A) in einer Richtung ist, in der sich die wärmeisolierendes Element-seitige Deckenwand (41A) erstreckt,
das zweite Trägerteil (23T) an einer vorbestimmten abdeckungsseitigen Seitenwand (23C) vorgesehen ist, die der wärmeisolierendes Element-seitigen Seitenwand (41B) der Vielzahl von abdeckungsseitigen Seitenwänden (23B, 23C, 23D, 23E) zugewandt ist, und in Kontakt mit einem Endabschnitt (41b) der wärmeisolierendes Element-seitigen Seitenwand (41B) in einer Richtung steht, in der sich die wärmeisolierendes Element-seitige Seitenwand (41B) erstreckt,
das dritte Trägerteil (23U) an der vorbestimmten abdeckungsseitigen Seitenwand (23C) vorgesehen ist und in Kontakt mit einem unteren Endabschnitt (23f) orthogonal zu der Richtung steht, in der sich die wärmeisolierendes Element-seitige Seitenwand (41B) erstreckt.

2. Die wärmeisolierende Struktur einer elektrischen Komponente (22) nach Anspruch 1, wobei
ein Zwischenraum zwischen der abdeckungsseitigen Deckenwand (23A) und der wärmeisolierendes Element-seitigen Deckenwand (41A) gebildet ist, und
ein Zwischenraum zwischen der vorbestimmten abdeckungsseitigen Seitenwand (23C) und der wärmeisolierendes Element-seitigen Seitenwand (41B) gebildet ist.

3. Die wärmeisolierende Struktur einer elektrischen Komponente (22) nach Anspruch 1 oder 2, wobei
das Abdeckelement (23) einen ersten Befestigungsabschnitt (21D), der an einem Endabschnitt (21c) des Platzierungsteils (21A) vorgesehen ist, und einen zweiten Befestigungsabschnitt (21C), der an dem anderen Endabschnitt (21d) des Platzierungsteils (21A) vorgesehen ist, aufweist
das feststehende Teil (7A, 7B) ein erstes feststehendes Teil (7B) und ein zweites feststehendes Teil (7A) umfasst, die sich an Positionen befinden, die höher als die Bodenplatte (2) sind,
das erste feststehende Teil (7B) einen ersten feststehenden Bereich (7c) aufweist, an dem der erste Befestigungsabschnitt (21D) befestigt ist,
das zweite feststehende Teil (7A) einen zweiten feststehenden Bereich (7a) aufweist, der sich an einer höheren Position als der erste feststehende Bereich (7c) befindet, und der zweite Befestigungsabschnitt (21C) an dem zweiten feststehenden Bereich (7a) befestigt ist,
wenn die vorbestimmte abdeckungsseitige Seitenwand (23C) als eine erste abdeckungsseitige Seitenwand (23C) verwendet wird, eine Öffnung (23b) an einer zweiten abdeckungsseitigen Seitenwand (23B) vorgesehen ist, die der ersten abdeckungsseitigen Seitenwand (23C) der Vielzahl von abdeckungsseitigen Seitenwänden (23B, 23C, 23D, 23E) gegenüberliegt,
die Öffnung (23b) in einer Richtung von oben nach unten offen ist, so dass ein oberer Endabschnitt der Öffnung (23b) über der Platzierungsoberfläche (21a) angeordnet ist,
der erste Befestigungsabschnitt (21D) sich von einem Endabschnitt (21c) des Platzierungsteils (21A) durch die Öffnung (23b) zu einer Außenseite der zweiten abdeckungsseitigen Seitenwand (23B) erstreckt,
eine Trennwand (23W) an der zweiten abdeckungsseitigen Seitenwand (23B) vorgesehen ist, und
die Trennwand (23W) zumindest einen Teil der Öffnung (23b) verschließt.

4. Die wärmeisolierende Struktur einer elektrischen Komponente (22) nach Anspruch 3, wobei
die Platzierungsoberfläche (21a) und der untere Endabschnitt (23f) der Trennwand (23W) an derselben Höhenposition angeordnet sind.

## Revendications

1. Structure d'isolation thermique d'un composant (22) électrique comprenant :
un élément (21) de fixation pourvu d'une partie (21A) de placement ayant une surface (21a) de placement, sur laquelle un composant (22) électrique est placé ;
un élément (23) de couverture ayant une paroi (23A) de plafond du côté de la couverture et une pluralité de parois (23B, 23C, 23D, 23E) latérales du côté de la couverture s'étendant vers le bas depuis la paroi (23A) de plafond du côté de la couverture, l'élément de couverture étant configuré pour recouvrir l'élément (21) de fixation et le composant (22) électrique par le dessus et par un côté ; et
un élément (41) d'isolation thermique comprenant une paroi (41A) de plafond du côté de l'élément d'isolation thermique et au moins une paroi (41B) latérale du côté de l'élément d'isolation thermique s'étendant vers le bas depuis la paroi (41A) de plafond du côté de l'élément d'isolation thermique, l'élément d'isolation thermique étant prévu entre l'élément (23) de couverture et le composant (22) électrique, la structure d'isolation thermique étant **caractérisée par le fait que**:
l'élément (21) de fixation est fixé à une partie (7A, 7B) fixe prévue sur une surface (2a) supérieure du panneau (2) de plancher d'un véhicule (1) et que l'élément (21) de fixation est en une position où la surface (21a) de placement est plus haute que le panneau (2) de plancher ; et
l'élément (23) de couverture comprend une première partie (23S) de support, une deuxième partie (23T) de support et une troisième partie (23U) de support,
la première partie (23S) de support est prévue sur la paroi (23A) de plafond du côté de la couverture et est en contact avec une partie (41b) d'extrémité de la paroi (41A) de plafond du côté de l'élément d'isolation thermique dans une direction, dans laquelle la paroi (41A) de plafond du côté de l'élément d'isolation thermique s'étend,
la deuxième partie (23T) de support est prévue sur une paroi (23C) latérale du côté de la couverture, qui est déterminée à l'avance et qui fait face à la paroi (41B) latérale du côté de l'élément d'isolation thermique de la pluralité de parois (23B, 23C, 23D, 23E) latérales du côté de la couverture et qui est en contact avec une partie (41b) d'extrémité de la paroi (41B) latérale du côté de l'élément d'isolation thermique dans une direction, dans laquelle la paroi (41B) latérale du côté de l'élément d'isolation thermique s'étend,
la troisième partie (23U) de support est prévue sur une paroi (23C) latérale du côté de la couverture, qui est déterminée à l'avance et qui est en contact avec une partie (23f) d'extrémité de fond orthogonale à la direction, dans laquelle la paroi (41B) latérale du côté de l'élément d'isolation thermique s'étend.

2. Structure d'isolation thermique d'un composant (22) électrique suivant la revendication 1, dans laquelle
un intervalle est formé entre la paroi (23A) de plafond du côté de la couverture et la paroi (41A) de plafond du côté de l'élément d'isolation thermique, et
un intervalle est formé entre la paroi (23C) latérale du côté de la couverture déterminée à l'avance et la paroi (41B) latérale du côté de l'élément d'isolation thermique.

3. Structure d'isolation thermique d'un composant (22) électrique suivant la revendication 1 ou 2, dans laquelle
l'élément (23) de couverture comprend une première partie (21D) de fixation prévue à une partie (21c) d'extrémité de la partie (21A) de placement et une deuxième partie (21C) de fixation prévue à l'autre partie (21d) d'extrémité de la partie (21A) de fixation,
la partie (7A, 7B) fixe comprend une première partie (7B) fixe et une deuxième partie (7A) fixe en des positions plus hautes que le panneau (2) de plancher,
la première partie (7B) fixe comprend une première région (7c) fixe, à laquelle la première partie (21D) de fixation est fixée,
la deuxième partie (7A) fixe comprend une deuxième région (7a) fixe en une position plus haute que la première région (7c) fixe et la deuxième partie (21C) fixe est fixée à la deuxième région (7a) fixe,
lorsque la paroi (23C) latérale du côté de la couverture déterminée à l'avance est utilisée comme première paroi (23C) latérale du côté de la couverture, une ouverture (23b) est prévue sur une deuxième paroi (23B) latérale du côté de la couverture faisant face à la première paroi (23C) latérale du côté de la couverture de la pluralité de parois (23B, 23C, 23D, 23E) latérales du côté de la couverture,
l'ouverture (23b) est ouverte dans une direction de haut en bas, de manière à ce qu'une partie d'extrémité supérieure de l'ouverture (23b) soit au-dessus de la surface (21a) de placement,
la première partie (21D) de fixation s'étend d'une partie (21c) d'extrémité de la partie (21A) de placement en passant par l'ouverture (23b) à un extérieur de la deuxième paroi (23B) latérale du côté de la couverture,
une cloison (23W) est prévue sur la deuxième paroi (23B) latérale du côté de la couverture et la cloison (23W) ferme au moins une partie de l'ouverture (23b).

4. Structure d'isolation thermique d'un composant (22) électrique suivant la revendication 3,
dans lequel la surface (21a) de placement et la partie (23f) d'extrémité de fond de la cloison (23W) sont en une même position en hauteur.
